# NEUE EUROPÄISCHE PATENTSCHRIFT

(11) **EP 1 231 189 B2**
(45) Veröffentlichungstag und Bekanntmachung des Hinweises auf die Entscheidung über den Einspruch: **07.03.2018**
(45) Hinweis auf die Patenterteilung: 05.10.2011
(21) Anmeldenummer: 02002384.2
(22) Anmeldetag: 31.01.2002
(51) Int. Cl.: C03C 8/02

(54) **Hochkorrosionsbeständige schwermetallfreie Emailzusammensetzung sowie Verfahren zu deren Herstellung und Verwendung, und beschichtete Körper**
Highly corrosion-resistant enamel composition free from heavy metals, method for its production, use and coated bodies
Composition d'émail exempte de métaux lourds à haute résistance à la corrosion, méthode de sa production, utilisation et corps revêtus

(30) Priorität: 08.02.2001 DE 10105702; 12.03.2001 DE 10111721
(43) Veröffentlichungstag der Anmeldung: 14.08.2002
(73) Patentinhaber: Pfaudler GmbH, 68723 Schwetzingen (DE)
(72) Erfinder: Schäfer, Günter, Dr., 67593 Westhofen (DE)
(74) Vertreter: Popp, Eugen

(56) Entgegenhaltungen:
- EP-A- 0 090 094
- EP-A- 0 444 821
- US-A- 5 326 728
- PATENT ABSTRACTS OF JAPAN vol. 007, no. 281 (C-200), 15. Dezember 1983 (1983-12-15) & JP 58 161776 A (TOUTOU KIKI KK), 26. September 1983 (1983-09-26)
- DATABASE WPI Section Ch, Week 198122 Derwent Publications Ltd., London, GB; Class L01, AN 1981-39840D XP002197449 & SU 765 223 A (BELO KIROV TECHN INST), 25. September 1980 (1980-09-25)
- R.LOHRENTZ: 'Mitteilungen des Vereins Duetscher Emailfachleute e.V.' UNTERSUCHUNGEN ZUM SÄUREANGRIFF AUF CHEMIEEMAIL Bd. 31, Nr. 11, November 1983, Seiten 161 - 180
- M.J BOUHIRON: 'Les appareils en emaille: tenue a la corrosion', 21 März 1986, RHONE-POULENC Seiten 1 - 24
- GOSSÉ, MARCEL: 'Émaillage - Vitrification' TECHNIQUES DE L'INGÉNIEUR 1973, Seiten 4590-1 - 4590-12

## Beschreibung

Die Erfindung betrifft eine Glaszusammensetzung zur Herstellung eines Deckemails zur Emaillierung von Stahl- und Kesselblech sowie von geometrischen Körpern , wie beispielsweise Stromstörern und dergleichen funktionellen Körpern zum Apparate- und Anlagenbau gemäß dem Oberbegriff des Patentanspruchs 1, ein Verfahren zur Herstellung einer derartigen Glaszusammensetzung gemäß dem Oberbegriff des Patentanspruches 15 und die Verwendung einer Glaszusammensetzung gemäß dem Oberbegriff des Patentanspruchs 16.

Derartige Glaszusammensetzungen zur Emaillierung von Stahl- und Kesselblechen zum Apparate- und Anlagenbau werden vielfach in der chemischen und pharmazeutischen Industrie benötigt. Übliche Glaszusammensetzungen und daraus resultierende Deckemails enthalten jedoch Schwermetalloxide und teilweise auch Fluoridbestandteile, mittels derer ein zum emaillieren notwendiges Eigenschaftsprofil der Glaszusammensetzungen erreicht wird. Hierzu gehören zum einen ein hoher Ausdehnungskoeffizient zwischen 87 x 10⁻⁷ K⁻¹ bis 110 x 10⁻⁷ K⁻¹ in einem Temperaturbereich von 20 °C bis 400 °C und zum anderen Erweichungstemperaturen im Bereich von 400 °C bis 600 °C. Um die Verarbeitkeit während des Produktions- und Emaillierprozesses zu verbessern, werden darüber hinaus zum Teil weitere Schwermetalloxide als Zuschlagstoffe zugegeben. So erlauben es Schwermetallverbindungen wie PbO und Sb₂O₃ gut haftende Deckemails herzustellen, die eine vergleichsweise hohe mechanische Schlagbeständigkeit besitzen. Des weiteren lassen sich die Ausdehnungskoeffizienten der Glaszusammensetzungen durch Zugabe dieser Schwermetalle an das Eigenschaftsprofil des verwendeten Stahls anpassen, so daß ein gutes Einbrennverhalten erreicht wird und/oder sich chemisch mit dem Stahl verbindet, so daß die Glaszusammensetzung zum einen als Email gut an dem Stahl haftet, als auch daß Radien, der insbesondere Behälter und Gerätschaften, GMP (Good Manufacturing Practise)-gerecht ausgelegt werden können, so daß Toträume in den Apparaten weitgehend minimiert werden können.

Probleme ergeben sich jedoch dann, wenn die Stoffe, die in den emaillierten Anlagen verwendet werden, stark korrosiv sind, wie dies in der chemischen und pharmazeutischen Industrie vielfach der Fall ist. In diesem Fall wird die Oberfläche - auch von Chemieemail - korrosiv angegriffen und es lösen sich Bestandteile aus dem Glas heraus. Die Oberfläche kann auch durch harte Feststoffe, insbesondere durch mechanischen Abrieb, geschädigt werden. In diesen Fällen kommt es zu einer Kontamination des in den Anlagen hergestellten Produktes mit den Bestandteilen des verwendeten Glases, wobei sich Schwermetallbestandteile als besonders problematisch erweisen. Dies kann bei kontaminationsempfindlichen und meist auch teuren Produktionen bis zum Totalverlust des hergestellten Produktes gehen, wenn eine dann notwendige Reinigung des Produktes nicht mehr möglich ist.

Während Glaszusammensetzungen in vielfältigen Bereichen, beispielsweise für Glas-basierte Kochfelder (DE 198 34 809), Dekormaterialien zur Farb- und Strukturgebung für Kochfelder und allen Arten von keramischen Erzeugnissen (DE 41 02 556 A1), als Dekorgläser für Kfz-Scheiben (DE 195 12 847 C1, DE 195 06 123 A1, DE 195 02 653 A1 sowie als katalytisch aktive Emaillierungen für Backöfen und Mikrowellenherde (DE 41 13 139 A1, DE 39 42 236 A1) Anwendung finden und entwickelt werden, sind Glaszusammensetzungen zur Herstellung von Apparate-Emails, die korrosionsbeständig, abriebfest und schwermetallfrei sind, kaum bekannt. Die EP 677 597 A1 beschreibt diesbezüglich ein Porzellan-Email, das mit Fasern verstärkt ist und aus einem zweikomponentigen Glassystem hergestellt wird. Durch einen Schichtauftrag dieser Gläser unterschiedlicher Zusammensetzung wird dort ein Verbundwerkstoff erzeugt, der ein Email mit erhöhter mechanischer Beständigkeit ergibt. Aufgrund des Fasergehalts und des Zweikomponentensystems ist dieses Email in der Herstellung jedoch produktionstechnisch als auch zeitlich aufwendig und teuer.

Die JP 58 161 776 beschreibt ein Produkt aus glänzendem Email, das ein fluoreszierendes Sulfidpigment aufweist, von geringer Beständigkeit ist und für eine Anwendung in Baderäumen, wie beispielsweise zur Herstellung von Fliesen oder Waschbecken gedacht ist. Eine ausgeprägte chemische Beständigkeit oder ein definierter Ausdehnungskoeffizient, der für hochtemperaturbeständige chemische Reaktionskessel oder entsprechende Apparate und Anlagen erforderlich ist, ist dort nicht notwendig. Zur Verbesserung der Beständigkeit des dortigen Produkts wird dort eine transparente Glasurschicht vorgeschlagen, die aus 55-65% SiO₂, 12-17% Na₂O, 7-10% ZrO₂, 1-4% TiO₂, maximal 2% Al₂O₃, maximal 2% B₂O₃ sowie maximal jeweils 1% MoO, K₂O, Fe₂O₃ und MgO besteht.

Die SU 765 223 B beschreibt ferner eine opake Glasur für Keramikoberflächen mit einem thermischen Ausdehnungskoeffizienten von 50 x 10⁻⁷ K⁻¹. Die dort beschriebene Glaszusammensetzung ist aufgrund des sehr niedrigen thermischen Ausdehnungskoeffizienten nicht zur Herstellung einer hochtemperaturbeständigen Beschichtung auf Emailbasis geeignet.

Des weiteren beschreibt die EP 0 090 094 A1 ein Sanitärprodukt und ein Verfahren zu dessen Herstellung. Das Sanitärprodukt basiert auf Feldspat, in welchem eine als Flußmittel bzw. Sinterhilfsmittel dienende Glasmasse Verwendung findet. Das dortige Glas dient als Additiv und ist selbst nicht zur Herstellung einer Beschichtung geeignet. Darüber hinaus ist das dortige verfestigte Glas zumindest teilkristallin, um gemäß dortiger Aufgabe eine neue und verbesserte kristalline Form von Dioxiden zur Verfügung zu stellen. Aufgrund der Teilkristallinität ist das dortige Glas jedoch nicht zur Herstellung eines Emails geeignet, da eine Kristallisation des Glases zu Emaillierfehlern führen würde.

In der US 5,326,728 A ist ferner eine bleifreie Emailzusammensetzung zum Verzieren bzw. Bedecken von Glaskeramiken für Kochplatten beschrieben, die eine niedrige thermische Ausdehnung aufweist. Die dortige Emailzusammensetzung ist zwar bleifrei, enthält jedoch zahlreiche giftige Schwermetalle wie Barium, Strontium und Zink. Darüber hinaus weist sie einen sehr niedrigen thermischen Ausdehnungskoeffizienten auf, der lediglich im Bereich von 49 x 10⁻⁷ K⁻¹ bis 55 x 10⁻⁷ K⁻¹ liegt. Eine Verwendung dieser Emailzusammensetzung zur Herstellung von hochkorrosionsbeständigen Beschichten auf Emailbasis ist nicht möglich, da es sich bei dortiger Glaszusammensetzung viel mehr nur um ein reines Borosilikatglas handelt, das mit einer hochkorrosionsbeständigen Beschichtung auf Emailbasis für chemische Reaktionsgefäße sowie für zugehörige Apparate und Anlage keine Gemeinsamkeit aufweist und für den erfindungsgemäßen Zweck nicht brauchbar ist.

Die EP 0 444 821 A beschreibt schlußendlich eine Glaszusammensetzung, die zum Dekorieren von Glas Verwendung findet. Die Zusammensetzung wird hierbei zunächst auf einen Gegenstand aufgebracht und anschließend gebrannt. Neben einem sehr niedrigen thermischen Ausdehnungskoeffizienten weist die dortige Glaszusammensetzung zum Teil extrem giftige Schwermetalle in erheblichen Konzentrationen auf. Hierzu zählen neben Zinn, Zink und Wismut auch Blei, so daß auch hier die Nachteile des Standes der Technik auftreten, die auf gleichermaßen schwermetallhaltigen Glaszusammensetzungen beruhen.

Zusammenfassend kann festgehalten werden, daß die vorgenannten Glaszusammensetzungen sehr niedrige thermische Ausdehnungskoeffizienten auf wenig beständig sind, so daß sie für eine hochkorrosionsbeständige Beschichtung von Stahl- und Kesselblechen sowie zum Emaillieren von Apparaten und Anlagen, die ihrerseits gegenüber mechanischen, thermischen und chemischen Einflüssen hochkorrosionsbeständig zu sein haben, nicht möglich ist.

Eine Verwendung der anderen vorgenannten vorwiegend im Haushaltsbereich verwendeten Glaszusammensetzungen als Apparateemail bzw. eine Übertragbarkeit derselben auf den Apparatebaubereich ist aus mehreren Gründen nicht möglich. So enthalten diese Glaszusammensetzungen zum einen Schwermetalle wie Barium, Zink, Strontium, Wismut und Antimon sowie vielfach auch Blei zumeist in oxidischer Form und zum anderen oft auch katalytisch aktive Substanzen wie Mno, P₂O₅, CuO, Fe₂O₃, V₂O₅ und MoO₃, die jedoch in, insbesondere Apparaturen und Behältern für die chemische und pharmazeutische Industrie zur Unterbindung unerwünschter Reaktionen zu vermeiden sind. Darüber hinaus ist deren chemische Beständigkeit zwar für haushaltstypische Säuren und Laugen geeignet; sie entspricht jedoch nicht den deutlich höheren Anforderungen der chemischen Industrie. Zudem besitzen alle diese Gläser und Emails sehr niedrige thermische Ausdehnungskoeffizienten, die zwischen 0,7 x 10⁻⁶ K⁻¹ und 2 x 10⁻⁶ K⁻¹ im Temperaturbereich 20 °C bis 700 °C liegen, um sie thermoschock unempfindlich zu machen. Des weiteren enthalten diese Emails bis zu 30 Gew.-% an farbgebenden Pigmenten, was ebenfalls zu einer Eigenschaftsverschlechterung für Apparateemail führt.

Während die tragende Glasstruktur für Kochfelder mehrere Millimeter Schichtdicke besitzt, werden die Dekorgläser nur in Schichtdicken zwischen 0,001 mm bis 0,01 mm aufgetragen und eingebrannt. Dies beeinflußt auch die Mahlfeinheit der Dekorglaszusammensetzungen. Hier werden mittlere Korngrößen von 5 *µ*m angestrebt, bevorzugt sind maximale Korngrößen von kleiner 10 *µ*m. Wenn mehrere Lagen der Glaszusammensetzung aufgetragen werden, ermöglicht es die geringe Schichtdicke, daß diese Gläser im Mehrschicht-Einbrandverfahren zusammengefertigt werden.

Im Unterschied zu diesen Gläsern und Emails besitzen glas-basierte Emails zur Beschichtung von Stahl- und Kesselblech für den Apparatebau davon völlig abweichende Eigenschaften. Sie müssen völlig homogen und gleichmäßig einen sehr guten Verbund mit dem verwendeten Stahlkörper eingehen, was bedeutet, daß hier chemische Zusammensetzung notwendig sind, die den thermischen Ausdehnungskoeffizienten auf 8,5 x 10⁻⁶ K⁻¹ bis 11 x 10⁻⁶ K⁻¹ im Temperaturbereich von 20 °C bis 400 °C anheben. Farbkörperzugaben von bis zu 30 Gew.-% sind nicht machbar, da sie das Eigenschaftsprofil des Emails zu stark verschieben würden. Da Schichtdicken im Millimeter-Bereich erwünscht sind, wird die Körnung der gemahlenen Glasfritte im Bereich von 1 *µ*m bis zu mehreren 100 *µ*m gehalten. Probleme ergeben sich auch bei dem Versuch, Mehrschicht-Einbrandverfahren auf den Behälterbau zu übertragen, da durch die schon erwähnten hohen Schichtdicken keine gleichmäßige Emaillierung im Mehrschichtverfahren in der notwendigen Qualität mehr möglich ist.

Aufgrund des Vorgenannten ist es die Aufgabe der Erfindung, eine von toxischen Schwermetallen freie Glaszusammensetzung zur Herstellung einer Email-Beschichtung an Apparaten, deren Teilen und Anlagen aufzuzeigen, die korrosionsbeständig gegen Säuren und Laugen ist, wobei die Glaszusammensetzung während des Emaillierprozesses eine leicht zu reinigende Oberfläche mit sehr geringer Rauhigkeit ausbildet, deren Erzeugung durch einen geeigneten Ausdehnungskoeffizienten sowie eine geeignete Erweichungstemperatur der Glaszusammensetzung gewährleistet ist. Weiterhin soll ein Verfahren zur Herstellung einer derartigen Glaszusammensetzung und die Verwendung einer solchen Glaszusammensetzung aufgezeigt werden.

Diese Aufgabe wird durch eine Glaszusammensetzung nach Patentanspruch 1, ein Verfahren zur Herstellung einer Glaszusammensetzung nach Patentanspruch 14 sowie die Verwendung der Glaszusammensetzung nach Patentanspruch 15 gelöst.

Insbesondere wird die Aufgabe durch eine Glaszusammensetzung zur Herstellung einer gegenüber mechanischen, thermischen und chemischen Einflüssen hochkorrosionsbeständigen Beschichtung auf Emailbasis gelöst, wobei die Glaszusammensetzung gemäß der Tabelle in Patentanspruch 1 im wesentlichen keine Schwermetalle und/oder Schwermetallverbindungen enthält, mit Ausnahme von Zirkoniumdioxid.

Insbesondere ist die Glaszusammensetzung der Erfindung zur Herstellung von hochkorrosionsbeständigen Anlagen und Apparaturen für die chemische und pharmazeutische Industrie geeignet, wobei die Glaszusammensetzung im wesentlichen aus Alkalioxiden, Erdalkalioxiden, B₂O₃, ZrO₂, SiO₂ und Al₂O₃ besteht.

Schwermetalle sind in der Glaszusammensetzung als Zusätze nicht enthalten und liegen allenfalls in kleinsten, nicht vermeidbaren Mengen aus Verunreinigungen der verwendeten Rohstoffe vor, wobei verunreinigungsfreie Rohstoffe bevorzugt Verwendung finden.

Der Gewichtsanteil der Summe der Alkalioxide in der Glaszusammensetzung liegt im Bereich von 10 Gew.-% bis 21,5 Gew.-% und bevorzugt im Bereich von 11 Gew.-% bis 20,5 Gew.-%.

Der Gewichtsanteil der Summe der Erdalkalioxide in der Glaszusammensetzung liegt im Bereich von 1,25 Ges.-% bis 8,5 Ges.-% und bevorzugt im Bereich von 2,5 Gew.-% bis 8 Gew.-%.

Der Gewichtsanteil der Summe von B₂O₃, ZrO₂, SiO₂ und Al₂O₃ in der Glaszusammensetzung liegt im Bereich von 65 Gew.-% bis 91,5 Gew.-% und bevorzugt im Bereich von 68 Gew.-% bis 88 Gew.-%.

Gemäß einer weiteren Ausführungsform weist die Glaszusammensetzung farbgebende Bestandteile auf, die in Form einer oder mehrerer färbender Oxide und/oder einer oder mehrerer färbender Pigmente enthalten sind. Es handelt sich hierbei um anorganische Farbkörper oder Oxide, mittels derer das Email problemlos eingefärbt werden kann, die gegenüber dem Glas bei der Einbrenntemperatur im wesentlichen stabil sind. Durch eine gezielte Zugabe färbender Oxide, die sich in dem Glas lösen, kann das Email, respektive die Glaszusammensetzung aber auch schon bei seiner Herstellung eingefärbt werden. Der Gewichtsanteil der farbgebenden Bestandteile beträgt hierbei bis zu 2 Gew.-%.

Die Gewichtsanteile der Einzelbestandteile in der Glaszusammensetzung sind nachfolgender Tabelle zu entnehmen.

| | | |
|---|---|---|
| Bestandteil | vorzugsweise [Gew.-%] | besonders bevorzugt [Gew.-%] |
| Li₂O | 0,25 - 3,0 | 0,5 - 2,5 |
| B₂O₃ | 0,25 - 3,0 | 0,5 - 3,0 |
| MgO | 0,25 - 2,5 | 0,5 - 2,0 |
| Al₂O₃ | 0,25 - 2,0 | 0,5 - 2,0 |
| K₂O | 0,50 - 4,0 | 1,0 - 4,0 |
| CaO | 1,00 - 6,0 | 2,0 - 6,0 |
| ZrO₂ | 8,50 - 13,5 | 9,0 - 13,0 |
| Na₂O | 9,25 - 14,5 | 9,5 - 14,0 |
| SiO₂ | 56,00 - 73,0 | 58,0 - 70,0 |
| farbgebende Bestandteile | 0,00 - 2,0 | 0,0 - 2,0 |

Ein wesentlicher Punkt der Erfindung liegt darin, daß gemäß der erfindungsgemäßen Glaszusammensetzung Alkalioxide, Erdalkalioxide und Boroxid in engen Toleranzen so miteinander kombiniert werden, daß sich im Wechselspiel mit Netzwerkbildnern wie ZrO₂, SiO₂ und Al₂O₃ ein optimales Eigenschaftsprofil hinsichtlich Ausdehnungsverhalten, Korrosionsbeständigkeit, Oberflächenrauhigkeit sowie Thermoschockbeständigkeit und Schlagfestigkeit ausprägt, daß diejenigen Eigenschaften der, herkömmlich mit Schwermetalloxiden hergestellten Deckemails erreicht und in Teilbereichen sogar übertrifft, ohne aber deren Nachteile, insbesondere im Hinblick auf Toxizität aufzuweisen.

Dies wird im wesentlichen dadurch erreicht, daß der Gewichtsanteil der Summe der Alkalioxide in den oben angegebenen Bereichen liegt. Der Zusatz von Alkali ist notwendig, um zum einen den Ausdehnungskoeffizienten auf den entsprechend notwendigen hohen Wert zum Emaillieren von, insbesondere Stahl zu bringen und um die erforderliche Oberflächengleichheit zu erzeugen, und zum anderen um die Erweichungstemperatur und damit die Einbrenntemperatur auf ein zum Emaillieren notwendiges Temperaturintervall zwischen 700°C und 1000°C, bevorzugt zwischen 760°C bis 950°C eingrenzen zu können und um die Viskosität in diesem Temperaturbereich entsprechend so weit zu erniedrigen, daß sich die nach dem Auftragen der Glaszusammensetzung auf einen Körper zunächst offene Glasschicht ohne zu fließen gleichmäßig schließt und eine feinporige, homogene Struktur ausbildet. Zu hohe Alkaligehalte senken die Korrosionsbeständigkeit wieder drastisch ab und führen zu einem unvorteilhaften Ansteigen des Ausdehnungskoeffizienten. Der Li₂O-Gehalt ist somit auf 3,0 Gew.-% begrenzt; der K₂O-Gehalt liegt bei maximal 4 Gew.-% und der Na₂O-Gehalt liegt bei maximal 14,5 Gew.-%.

Der Boroxid-Gehalt liegt zwischen 0,25 Gew.-% und 3 Gew.-% und bevorzugt zwischen 0,5 Gew.-% und 3 Gew.-%. Das Boroxid reduziert die Gefahr einer Kristallation des Glases wegen des Emaillierprozesses. Boroxid trägt auch dazu bei, die Viskosität bei der Einbrenntemperatur genügend weit abzusenken, um eine homogene Emaillierung zu gewährleisten und ermöglicht so eine gleichmäßige Emaillierung ohne daß ein Fließen des erreichten Glases auftritt. Besonders günstige Eigenschaften erhalten Glaszusammensetzungen mit B₂O₃-Gehalten zwischen 0,5 Gew.-% und 3 Gew.-%.

ZrO₂, SiO₂ und Al₂O₃ sind die Hauptbestandteile des erfindungsgemäßen Glases. Hierbei sind SiO₂ und ZrO₂ als Netzwerkbildner für die Stabilität, die chemische Beständigkeit und die Festigkeit des Glases verantwortlich.

Der SiO₂-Gehalt liegt zwischen 56,00 Gew.-% und 73 Ges.-% und bevorzugt zwischen 58 Gew.-% und 70 Gew.-%. Höhere Gehalte sind ungünstig, da sie die Viskosität ungünstig erhöhen und einen Glattbrand verhindern. Niedrigere Gehalte vermindern die Viskosität und die Korrosionsbeständigkeit und führen zu einer Erhöhung des Ausdehnungskoeffizienten.

Der Al₂O₃-Gehalt liegt im Bereich von 0,25 Gew.-% bis 2 Gew.-% und bevorzugt im Bereich von 0,5 Gew.-% bis 2 Gew.-%. Er erhöht die Viskosität des Glases unterhalb der Einbrenntemperatur soweit, daß ein ungleichmäßiges Fließen der porösen Glasschicht beim Emaillieren vermieden wird und es nicht zu einem Einfluß von großen Glasblasen, die sich negativ auf die Homogenität der auszubildenden Emaillierschichtdicke auswirken würden, kommt. Aufgrund seiner Eigenschaft als Netzwerkbildner verhindert es zudem eine Entglasung des Emails bei wiederholtem Erwärmen auf Einbrenntemperatur.

ZrO₂ erhöht ebenfalls die Festigkeit des Netzwerkes innerhalb des Emails. Zusätzlich wirkt es sich positiv auf die Korrosionsbeständigkeit im alkalischen Bereich aus. In der Glaszusammensetzung kann es in Mengen im Bereich von 8,5 Gew.-% bis 13,5 Gew.-% und bevorzugt im Bereich von 9 Gew.-% bis 13 Gew.-% enthalten sein, wobei hier die günstigsten Eigenschaften der Glaszusammensetzung erzielt werden.

Die Erdalkalioxide unterstützen die viskositätsabsinkenden Eigenschaften der Alkalien. Rechtzeitig erhöhen sie die Korrosionsbeständigkeit; Glanz und Haftfestigkeit steigen an. Die Summe der Gewichtsanteile der Erdalkalioxide in der Glaszusammensetzung beträgt maximal 8,5 Gew.-%. Höhere Gehalte wirken sich negativ auf die chemische Beständigkeit aus und verschlechtern das Einbrennverhalten des Emails. Bevorzugt werden MgO-Gehalte im Bereich von 0,25 Gew.-% bis 2,5 Gew.-% und bevorzugt im Bereich von 0,5 Ges.-% bis 2,0 Gew.-%. Die CaO-Gehalte liegen im Bereich von 1 Gew.-% bis 6 Gew.-% und bevorzugt im Bereich von 2 Gew.-% bis 6 Gew.-%.

Auf die schwereren Erdalkalioxide SrO und BaO wird trotz ihrer positiven Eigenschaften für die Glasbildung und die Stabilität gegenüber chemischer Korrosion prinzipiell verzichtet, um keine - aufgrund ihres Schwermetallcharakters - toxischen Komponenten in die Gläser zu inkorporieren.

Typischerweise in herkömmlichen Emails und Gläsern verwendete und zugesetzte Schwermetalloxide wie BaO, SrO, ZnO, SnO₂, MnO, Sb₂O₃, Bi₂O₃ sind nur noch in Mengen kleiner 0,5 Gew.-%, entsprechend dem Gehalt an Verunreinigungen der verwendeten Rohstoffe, in dem erfindungsgemäßen Email enthalten. Andere Schwermetalloxide, speziell die der Elemente Blei, Kadmium, Arsen, Niob, Molybden, Wolfram, Chrom und Nickel sind ebenfalls nur entsprechend den Verunreinigungen der verwendeten Rohstoffe zur Glasherstellung in dem Email enthalten. Chemische Analysen zeigen, daß typische Werte für Verunreinigungen mit diesen Schwermetalloxiden unter 0,2 Gew.-% liegen.

Aufgrund dieser extrem geringen Konzentration ist eine Kontamination von in Anlagen, die mit einer erfindungsgemäßen Glaszusammensetzung beschichtet sind, hergestellten Produkten nicht zu befürchten. Der Schwermetallgehalt kann bei Verwendung hochreiner Rohstoffe weiter abgesenkt werden und gegen Null tendieren. Dies kann im Fall von einigen Spezialanwendungen gegebenenfalls notwendig sein und entsprechend vorgenommen werden.

Darüber hinaus ist die Glaszusammensetzung gemäß einer Ausführungsform im wesentlichen fluoridfrei.

Gemäß einer weiteren Ausführungsform der Erfindung weist die Glaszusammensetzung einen thermischen Ausdehnungskoeffizienten auf, der in einem Temperaturbereich von 20°C bis 400°C im Bereich von 87 x 10⁻⁷ K⁻¹ bis 110 x 10⁻⁷ K⁻¹, vorzugsweise im Bereich von 90 x 10⁻⁷ K⁻¹ bis 103 x 10⁻⁷ K⁻¹, und besonders bevorzugt im Bereich von 93 x 10⁻⁷ K⁻¹ und 97 x 10⁻⁷ K⁻¹ liegt.

Des weiteren ist der Ausdehnungskoeffizient der Glaszusammensetzung so beschaffen, daß durch einen zur Beschichtung dienenden Körper, insbesondere einen Stahlkörper, beim Emaillieren das Email soweit verspannt wird, daß Druckspannungen ausgebildet werden, durch die die Schlagbeständigkeit des Glases gegen mechanische Beschädigungen erhöht wird.

Der Wert des Ausdehnungskoeffizienten der beschriebenen Glaszusammensetzung, respektive des beschriebenen Emails harmoniert so mit dem Eigenschaftsprofil des verwendeten Stahls, daß es zusammen mit der Haftung des Emails und seinem Einbrennverhalten ermöglicht wird, daß die Radien an den zu beschichtenden Apparaten und Anlagen GMP-gerecht ausgelegt werden können, so daß Toträume in den Apparaten und Anlagen weitgehend minimiert werden können. Die beim Emaillieren eines Stahlkörpers entstehenden Druckspannungen sind hierbei durch den erfindungsgemäßen thermischen Ausdehnungskoeffizienten so auslegbar, daß selbst wenn der Stahlkörper in den Bereich der Zugbelastung kommt, die Druckspannungen im Email noch nicht abgebaut sind. Dadurch erhöht sich die Schlagbeständigkeit des Glases gegen mechanische Beschädigungen soweit, daß es nicht zu einer Beschädigung der Emailschicht aufgrund zu starker lokaler Verspannungen des Bauteils in der Verbundschicht Emailschicht-Stahl kommt. Auf diese Weise können speziell mechanisch gefährdete Ecken und Kanten hinsichtlich ihrer Anfälligkeit für Beschädigungen optimiert und deren Langlebigkeit verbessert werden.

Erfindungsgemäß liegt die Erweichungstemperatur der Glaszusammensetzung im Bereich von 400°C bis 600°C, vorzugsweise im Bereich von 450°C bis 580°C und besonders bevorzugt im Bereich von 470°C bis 550°C.

Somit ist bei der erfindungsgemäßen Glaszusammensetzung das Erweichungsverhalten so eingestellt, daß bei den Emailliertemperaturen von vorzugsweise 760°C bis 950°C ein glattes Aufschmelzen und Versintern der einzelnen Glasteilchen stattfindet, daß aber eine ausreichende Standfestigkeit zur Erhaltung der Schichtstärke und Konturenschärfe des aufgebrachten Glasbisquits auch während der Emaillierung sichergestellt ist. Dies ist unerläßlich, um eine vollständige, homogene und qualitativ hochwertige Glasbeschichtung des zugrundeliegenden Stahlkörpers, sei es ein Rohrbehälter, eine Turbine oder ein anderes Bauteil mit komplizierten Geometrien und Radien in einer kontinuierlichen Fertigung herzustellen.

Gemäß einer Ausführungsform der Erfindung weist die Glaszusammensetzung vor einem Einbrennen Korngrößen im Bereich von 0,01 *µ*m bis 800 *µ*m, bevorzugt im Bereich von 0,01 *µ*m bis 600 *µ*m und besonders bevorzugt im Bereich von 1 *µ*m bis 500 *µ*m auf. Derartige Korngrößen sind insbesondere zur Herstellung einer Emailschichtdicke im Bereich von 0,1 mm bis 1,2 mm, bevorzugt im Bereich von 0,2 mm bis 1,0 mm vorteilhaft, die gemäß einer weiteren Ausführungsform nach dem Auftragen und Einbrennen der Glaszusammensetzung an einem Körper, an diesem vorliegen. Solche Emailschichtdicken sind hinsichtlich der gewünschten Lebensdauer des mit der Emailschicht versehenen Körpers sowie hinsichtlich der Größe und damit des Platzbedarfes der beschichteten Anlage bzw. Apparatur als auch hinsichtlich des zu erwartenden Abriebs optimiert, wobei insbesondere im alkalischen bei einem pH-Wert von 14 eine Abtragsrate von 0,1 mm pro Jahr erst bei 70°C erreicht ist. Selbstverständlich ist es ebenso möglich, größere Schichtdicken zu erzeugen, wobei die Glaszusammensetzung in diesem Fall entweder mehrschichtig aufgetragen und eingebrannt wird oder größere Korngrößen Verwendung finden.

Gemäß einer weiteren Ausführungsform der Erfindung liegt die Glaszusammensetzung vor dem Einbrennen als Granulat vor. Der hierin begründete Vorteil liegt darin, daß die Glaszusammensetzung entsprechend der Art ihrer Verwendung mittels, beispielsweise Kugelmühlen auf ihren jeweils optimalen Körnungsgrad eingestellt werden kann. Das Mahlen kann hierbei naß oder trocken erfolgen, wobei Naß-Mahlen bevorzugt mit Wasser als Befeuchtungsmedium durchgeführt wird, wobei auch andere Hilfsstoffe, wie beispielsweise leicht flüchtige Substanzen wie Alkohol verwendet werden können. Im Falle des Naß-Mahlens kann gleichzeitig ein auftragsfähiger Schlicker erzeugt werden, der, gegebenenfalls mit Stellmitteln vermischt auf einen Körper aufgebracht werden kann.

Erfindungsgemäß ist die Glaszusammensetzung hinsichtlich ihrer Eigenschaften, insbesondere ihres Ausdehnungskoeffizienten, ihrer Viskosität, ihrer Korrosionsbeständigkeit, so auf die Eigenschaften eines zu beschichtenden Körpers, insbesondere dessen Material und dessen Geometrie abgestimmt, daß sowohl über die Beschichtungsfläche als auch über deren Dicke ein gleichmäßiges und homogenes Einbrennverhalten der Glaszusammensetzung an dem Körper sowie eine gleichmäßige Haftung der resultierenden Emailbeschichtung an dem Körper gewährleistet ist.

Des weiteren wird die Aufgabe durch ein Verfahren zur Herstellung einer Glaszusammensetzung gelöst, wobei im wesentlichen schwermetallfreie keramische Rohstoffe gemäß der im Patentanspruch 1 sowie oben angegebenen Gewichtsanteile vermischt, anschließend auf eine Temperatur von im wesentlichen 1200°C bis 1600°C erwärmt und vollständig geschmolzen und nachfolgend nach einem Abschrecken zu einem Granulat verarbeitet werden. Ein wesentlicher Punkt der Erfindung liegt hierbei in der Herstellung des Glases, die in der Weise erfolgt, daß keramische Rohstoffe in entsprechenden Mengen und Verhältnissen abgewogen werden und in einem Intensivmischer zu einem homogenen Pulver vermischt werden. Diese Mischung wird dann in einem Schmelzofen bei Temperaturen zwischen 1200°C bis 1600°C solange erhitzt, bis sich einheitliches, homogenes Glas ohne Rückstände gebildet hat. Zur Weiterverarbeitung wird das geschmolzene Glas durch ein plötzliches Abschrecken zu einheitlichem Granulat verarbeitet. Dies geschieht entweder durch Abkühlen der Schmelze zwischen gekühlten Drehwalzen, mit anschließendem Abschrecken im Wasserbad oder durch intensives Vermischen mit Wasser entweder in einem Becken oder einem Fallrohr. Das so hergestellte Granulat wird anschließend getrocknet und kann bis zur Weiterverarbeitung gelagert werden. Durch Mahlen in Kugelmühlen unter Zusatz von Hilfsstoffen wird eine Glasfritte mit einer Kornverteilung, die zwischen 1 *µ*m und 500 *µ*m liegt, hergestellt.

Des weiteren wird die Aufgabe durch die Verwendung der Glaszusammensetzung nach einem der Ansprüche 1-13 zur Herstellung einer Deck-Email-Beschichtung gelöst. Hierdurch wird vermieden, daß gegenüber Chemikalien und Korrosion sowie gegenüber Abrieb empfindliche Anlagenteile beschädigt werden.

Darüber hinaus wird die Verwendung der Glaszusammensetzung nach einem der Ansprüche 1-13 zur Herstellung einer Email-Beschichtung auf geometrischen Körpern, insbesondere aus Stahl-und/oder Kesselblech beschrieben. Auch hier liegt der erfindungsgemäße Vorteil darin, daß an sich empfindliche Anlagenteile vor einem direkten Angriff von aggressiven und abrasiven Chemikalien und Substraten geschützt sind, aber gleichzeitig eine Kontamination mit Schwermetallen wirkungsvoll verhindert wird, da Schwermetalle in der erfindungsgemäßen Glaszusammensetzung nicht enthalten sind.

Weiterhin ist die Verwendung der Glaszusammensetzung nach einem der Ansprüche 1-13 erfindungsgemäß auch zur Herstellung einer Email-Beschichtung auf einer bestehenden Email-Beschichtung und/oder auf Glas und/oder auf keramischen Materialien möglich.
Des weiteren ist ein wichtiger Aspekt die Verwendung der Glaszusammensetzung zum Herstellen eines beschichteten Körpers, insbesondere aus Stahl- und/oder Kesselblech durch Emaillieren mit einer Glaszusammensetzung gelöst, wobei folgende Schritte umfaßt sind:
- Vermahlen der Glaszusammensetzung mit, vorzugsweise voll entsalztem Wasser zur Herstellung eines wässrigen Schlikkers;
- Einstellen der Konsistenz des Schlickers mit Hilfe von Stellmitteln;
- Naß-Auftragen des Schlickers auf den zu beschichtenden Körper;
- Trocknen des Aufgetragenen Schlickers; und
- Einbrennen und/oder Sintern des aufgetragenen Schlickers, und wobei die Gewichtsanteile der Einzelbestandteile in der Glaszusammensetzung gemäß der Tabelle auf den Seiten 8/9 der Beschreibung vorliegen.

Ein weiterer wichtiger Aspekt ist die Verwendung der Glaszusammensetzung zum Herstellen eines beschichteten Körpers, insbesondere aus Stahl- und/oder Kesselblech, durch Emaillieren mit der Glaszusammensetzung, wobei folgende Schritte umfaßt sind:
- Trocken-Auftragen der Glaszusammensetzung auf den zu beschichtenden Körper;
- Einbrennen und/oder Sintern der aufgetragenen Glaszusammensetzung.

Die Gewichtsanteile der Einzelbestandteile liegen auch hier gemäß der auf den Seiten 8/9 angegebenen Tabelle vor.
- Gemäß einer weiteren Ausführungsform der Erfindung ist auch ein kombiniertes Naß-/Trockenauftragen der Glaszusammensetzung in einem einzigen Fertigungsschritt möglich und vorgesehen.

Die Einstellung der Konsistenz des Schlickers mit Hilfe von Stellmitteln, wie beispielsweise oberflächenaktiven Substanzen, Netzmitteln, dampfdruckerhöhenden Mitteln und dergleichen die Auftragsfähigkeit und Weiterverarbeitbarkeit begünstigenden Hilfsstoffen ist hierbei sowohl bei einem Naß-Auftragen als auch gegebenenfalls bei einem Trocken-Auftragen optional und kann unterbleiben sofern dies nicht gewünscht ist.

Für den Trocken-Auftrag wird das Pulver trocken bis auf eine maximale Frittengröße von 500 *µ*m vermahlen.

Gemäß einer Ausführungsform erfolgt das Auftragen mittels Spritz- und/oder Sprühtechnik, wobei das Auftagen gemäß einer weiteren Ausführungsform der Erfindung unter Verwendung eines elektrischen Gleichspannungsfeldes durchgeführt wird.

Die Auftragstechnik erfolgt in der Art, daß der Schlicker mit Hilfe einer bevorzugt 2-Stoff-Pistole so auf das Grundemail oder den Stahl- oder Kesselblech- oder sonstigen Körper aufgetragen wird, daß eine gleichmäßige und homogene Beschichtung des Körpers erfolgt. Im Fall eines Naß-Auftragens ist vor dem Einbrennen ein vorgeschalteter Trockenprozeß unabdingbar, der sicherstellt, daß beim Versintern des Glases auf dem Körper das Email eine homogene, entsprechend dem Auftrag gleichmäßige und geschlossene Schicht ausbildet, die eine gleichmäßige Blasenstruktur mit kleinen Gasblasen besitzt.

Gemäß einer weiteren Ausführungsform der Erfindung wird die Temperaturführung so gestaltet, daß der Einbrand des Emails überall dasselbe Aufschmelzverhalten zeigt und daß die Emaillierung auch an solchen Stellen fehlerfrei erfolgt, die aufgrund ihrer örtlichen Lage oder speziellen Geometrie und Materialstärke normalerweise entweder zu lange einer zu hohen Temperatur ausgesetzt wären und daher durch Verlaufen die Gefahr des ungleichmäßigen Verschmelzens des Emails besteht ("Schieben") oder daß bei ungünstiger Lage und hoher Wanddicke des Stahls die für einen normalerweise notwendigen gleichmäßigen Sinterprozeß notwendige Temperatur nicht lange genug erreicht wird. In diesem Fall würde das Email eine hohe Restrauhigkeit und Welligkeit mit einem verschlechterten Eigenschaftsprofil bezüglich eines Thermoschockverhaltens und bezüglich seiner chemischen Beständigkeit besitzen.

Zur Erzielung einer gleichmäßigen Emaillierung kann auch eine kombinierte Naß-Trocken-Auftragung zum Schichtaufbau verwendet werden. Eine alternative Auftragstechnik stellt die elektrostatische Auftragstechnik dar. Hier wird der Spritzauftrag durch ein zwischen der Pistole und dem zu beschichtenden Bauteil anliegendes starkes elektrisches Gleichspannungsfeld unterstützt. Durch das sich beim Spritzen aufbauende elektrische Feld werden die Tröpfchen und Pulverteilchen selbst an die Stellen getragen, die mit konventioneller Beschichtungstechnik nur schlecht zugänglich sind. Sie führt zu einem besonders homogenen Glasbisquit auch an Stellen mit geometrisch kritischen Konturen. Durch die Kombination der Auftragstechniken lassen sich erfindungsgemäß pro Beschichtungsschritt Emailschichtdikken zwischen 0,1 mm und 1,2 mm, bevorzugt im Bereich von 0,2 mm bis 1,0 mm Dicke nach dem Einbrennen an den Bauteilen realisieren. Gemäß einer weiteren Ausführungsform der Erfindung ist es vorgesehen, daß bestimmte Teile des zu beschichtenden Körpers während des Einbrennens und/oder Sinterns zur Einstellung der optimalen Temperatur gekühlt oder zusätzlich erwärmt werden. Dies ist beispielsweise mittels eines Gebläses, vorzugsweise mit Inertgas, sowie durch Bestrahlen mit, beispielsweise hochenergetischen Infrarotlichtquellen möglich.

Des weiteren kann ein Körper mit einer Glaszusammensetzung versehen werden, deren Gewichtsanteile ihrer Einzelbestandteile entsprechend obiger Tabelle vorliegen.

Darüber hinaus ist die erfindungsgemäße Glaszusammensetzung zur Beschichtung eines im wesentlichen aus Eisen und/oder einer Eisenlegierung bestehenden Körpers oder Behälters geeignet, wobei eine gegenüber mechanischen, thermischen und chemischen Einflüssen hochkorrosionsbeständigen Beschichtung auf Emailbasis ausgebildet wird, wobei die Beschichtung im wesentlichen faserfrei ist und keine Schwermetalle und/oder Schwermetallverbindungen enthält.

Durch die Verwendung derartiger Körper ist eine Schwermetallkontamination von Produkten, die unter Verwendung derartiger Körper hergestellt werden, ausgeschlossen.

Weitere Ausführungsformen der Erfindung ergeben sich aus den Unteransprüchen.

Nachfolgend wird die Erfindung anhand eines Vergleichsbeispiels beschrieben.

Das in der Erfindung beschriebene Email eignet sich aufgrund seiner Schwermetallfreiheit als Beschichtung in Anlagen für die Herstellung von ultra-reinen Produkten in der Pharmazie-, Lebensmittel-, Biotechnologie- und Halbleiterindustrie sowie in allen Bereichen der chemischen, Wirkstoff- und Lebensmittelindustrie, deren Produkte selbst für geringste Verunreinigungen sensibel sind.

Durch den Zusatz von bis zu 2 Gew.-% oxidischer Farbpigmente kann die Farbgebung des Emails beeinflußt werden, ohne daß das Eigenschaftsprofil verändert wird.

Das erfindungsgemäße Email besitzt nach der Emaillierung eine extrem glatte Oberfläche mit einer Rₐ-Rauhigkeit von 0,02 *µ*m bis 0,1 *µ*m, die Produktanhaftungen weitestgehend verhindern. Eine darüber hinaus wesentliche Eigenschaft des erfindungsgemäßen Emails ist die hohe Korrosionsbeständigkeit des Emails, die den gesamten pH-Wert-Bereich abdeckt und im alkalischen optimiert ist.

An dieser Stelle sei darauf hingewiesen, daß alle oben beschriebenen Teile für sich allein gesehen und in jeder Kombination als erfindungswesentlich beansprucht werden.

## Patentansprüche

1. Glaszusammensetzung zur Herstellung einer gegenüber mechanischen, thermischen und chemischen Einflüssen hochkorrosionsbeständigen Beschichtung auf Emailbasis,
**dadurch gekennzeichnet, daß**
- die Glaszusammensetzung im wesentlichen keine Schwermetalle und/oder keine Schwermetallverbindungen enthält, mit Ausnahme von Zirkoniumdioxid;
- die Gewichtsanteile der Einzelbestandteile in der Glaszusammensetzung gemäß nachfolgender Tabelle vorliegen:
| Bestandteil | [Gew.-%] | bevorzugt [Gew.-%] |
|---|---|---|
| Li₂O | 0,25 - 3,0 | 0,5 - 2,5 |
| B₂O₃ | 0,25 - 3,0 | 0,5 - 3,0 |
| MgO | 0,25 - 2,5 | 0,5 - 2,0 |
| Al₂O₃ | 0,25 - 2,0 | 0,5 - 2,0 |
| K₂O | 0,50 - 4,0 | 1,0 - 4,0 |
| CaO | 1,00 - 6,0 | 2,0 - 6,0 |
| ZrO₂ | 8,50 - 13,5 | 9,0 - 13,0 |
| Na₂O | 9,25 - 14,5 | 9,5 - 14,0 |
| SiO₂ | 56,00 - 73,0 | 58,0 - 70,0 |
| farbgebende Bestandteile | 0,00 - 2,0 | 0,0 - 2,0 |
so daß die Glaszusammensetzung einen thermischen Ausdehnungkoeffizienten aufweist, der in einem Temperaturbereich von 20°C bis 400°C im Bereich von 87 x 10⁻⁷ K⁻¹ bis 110 x 10⁻⁷ K⁻¹, vorzugsweise im Bereich von 90 x 10⁻⁷ K⁻¹ bis 103 x 10⁻⁷ K⁻¹, und besonders bevorzugt im Bereich von 93 x 10⁻⁷ K⁻¹ bis 97 x 10⁻⁷ K⁻¹ liegt.

2. Glaszusammensetzung nach Anspruch 1,
**dadurch gekennzeichnet, daß**
der Gewichtsanteil der Summe der Alkalioxide in der Glaszusammensetzung im Bereich von 10 Gew.-% bis 21,5 Gew.-% und bevorzugt im Bereich von 11 Gew.-% bis 20,5 Gew.-% liegt.

3. Glaszusammensetzung nach einem der vorhergehenden Ansprüche,
**dadurch gekennzeichnet, daß**
der Gewichtsanteil der Summe der Erdalkalioxide in der Glaszusammensetzung im Bereich von 1,25 Gew.-% bis 8,5 Gew.-% und bevorzugt im Bereich von 2,5 Gew.-% bis 8 Ges.-% liegt, wobei im Wesentlichen kein Barium und Strontium enthalten ist.

4. Glaszusammensetzung nach einem der vorhergehenden Ansprüche,
**dadurch gekennzeichnet, daß**
der Gewichtsanteil der Summe von B₂O₃, ZrO₂, SiO₂ und Al₂O₃ in der Glaszusammensetzung im Bereich von 65,0 Gew.-% bis 91,5 Gew.-% und bevorzugt im Bereich von 68,0 Gew.-% bis 88,0 Gew.-% liegt.

5. Glaszusammensetzung nach einem der vorhergehenden Ansprüche,
**dadurch gekennzeichnet, daß**
die Glaszusammensetzung farbgebende Bestandteile, insbesondere ein oder mehrere färbende Oxide und/oder ein oder mehrere färbende Pigmente enthält.

6. Glaszusammensetzung nach einem der vorhergehenden Ansprüche,
**dadurch gekennzeichnet, daß**
die Glaszusammensetzung im wesentlich fluoridfrei ist.

7. Glaszusammensetzung nach einem der vorhergehenden Ansprüche,
**dadurch gekennzeichnet, daß**
die Erweichungstemperatur der Glaszusammensetzung im Bereich von 400°C bis 600°C, vorzugsweise im Bereich von 450°C bis 580°C und besonders bevorzugt im Bereich von 470°C bis 550°C liegt.

8. Glaszusammensetzung nach einem der vorhergehenden Ansprüche,
**dadurch gekennzeichnet, daß**
die Eigenschaften der Glaszusammensetzung und/oder der Beschichtung von farbgebenden Bestandteilen, die in einer Konzentration von bis zu 2,5 Gew.-%, vorzugsweise bis zu 2 Gew.-% vorliegen, im wesentlichen nicht beeinflußt werden.

9. Glaszusammensetzung nach einem der vorhergehenden Ansprüche,
**dadurch gekennzeichnet, daß**
die Glaszusammensetzung vor dem Einbrennen als Granulat vorliegt.

10. Glaszusammensetzung nach einem der vorhergehenden Ansprüche,
**dadurch gekennzeichnet, daß**
die Glaszusammensetzung vor einem Einbrennen Korngrößen im Bereich von 0,01 µm bis 800 µm, bevorzugt im Bereich von 0,1 µm bis 600 µm und besonders bevorzugt Bereich von 1 µm bis 500 µm aufweist.

11. Glaszusammensetzung nach einem der vorhergehenden Ansprüche,
**dadurch gekennzeichnet, daß**
die Glaszusammensetzung hinsichtlich ihrer Eigenschaften, insbesondere ihres Ausdehnungskoeffizient, ihrer Viskosität, ihrer Korrosionsbeständigkeit, so auf die Eigenschaften eines zu beschichtenden Körpers, insbesondere dessen Material und dessen Geometrie, abgestimmt ist, daß sowohl über die Beschichtungsfläche als auch über deren Dicke ein gleichmäßiges und homogenes Einbrennverhalten der Glaszusammensetzung an dem Körper, sowie eine gleichmäßige Haftung der resultierenden Email-Beschichtung an dem Körper gewährleistet ist.

12. Glaszusammensetzung nach einem der vorhergehenden Ansprüche,
**dadurch gekennzeichnet, daß**
der Ausdehnungskoeffizient der Glaszusammensetzung so beschaffen ist, daß durch einen zur Beschichtung dienenden Körper, insbesondere Stahlkörper, beim Emaillieren das Email so weit verspannt wird, daß Druckspannungen ausgebildet werden.

13. Glaszusammensetzung nach einem der vorhergehenden Ansprüche,
**dadurch gekennzeichnet, daß**
nach dem Auftragen und Einbrennen an einem Körper pro Beschichtungsschritt eine Erzeugung einer Schichtdicke im Bereich von 0,1 mm bis 1,2 mm, bevorzugt im Bereich von 0,2 mm bis 1,0 mm gewährleistet ist.

14. Verfahren zur Herstellung einer Glaszusammensetzung, wobei im wesentlichen schwermetallfreie keramische Rohstoffe bzw. Bestandteile gemäß der in Patentanspruch 1 tabellarisch angegebenen Gewichtsanteile vermischt, anschließend auf eine Temperatur von im wesentlichen 1200°C bis 1600°C erwärmt und vollständig geschmolzen und nachfolgend nach einem Abschrecken zu einem Granulat verarbeitet werden.

15. Verwendung der Glaszusammensetzung nach einem der Ansprüche 1 bis 13 zur Herstellung einer Deck-Email-Beschichtung auf geometrischen Körpern, insbesondere aus Stahl- und/oder Kesselblech, und/oder auf einer bestehenden Email-Beschichtung und/oder auf Glas und/oder auf keramischen Materialien.

16. Verwendung nach Anspruch 15
zum Herstellen eines beschichteten Körpers,
**gekennzeichnet durch**
folgende Schritte:
- Vermahlen der Glaszusammensetzung mit, vorzugsweise vollentsalztem Wasser zur Herstellung eines wäßrigen Schlickers;
- Einstellen der Konsistenz des Schlickers mit Hilfe von Stellmitteln;
- Naß-Auftragen des Schlickers auf den zu beschichtenden Körper;
- Trocknen des aufgetragenen Schlickers; und
- Einbrennen und/oder Sintern des aufgetragenen Schlickers,
und/oderfolgende Schritte:
- Trocken-Auftragen der Glaszusammensetzung auf den zu beschichtenden Körper;
- Einbrennen und/oder Sintern der aufgetragenen Glaszusammensetzung, wobei die Gewichtsanteile der Einzelbestandteile in der Glaszusammensetzung gemäß der in Anspruch 1 aufgeführten Tabelle vorliegen.

17. Verwendung nach Anspruch 16,
**dadurch gekennzeichnet, daß**
das Auftragen mittels Spritz- und/oder Sprühtechnik durchgeführt wird.

18. Verwendung nach einem der vorhergehenden Ansprüche 16 oder 17,
**dadurch gekennzeichnet, daß**
das Auftragen unter Verwendung eines elektrischen Gleichspannungsfeldes durchgeführt wird.

19. Verwendung nach einem der vorhergehenden Ansprüche 16 bis 18,
**dadurch gekennzeichnet, daß**
pro Beschichtungsschnitt eine Emailschicht mit einer Schichtdicke im Bereich von 0,1 mm bis 1,2 mm, bevorzugt im Bereich von 0,2 mm bis 1,0 mm erzeugt wird.

20. Verwendung nach einem der vorhergehenden Ansprüche 16 bis 19,
**dadurch gekennzeichnet, daß**
das Einbrennen und/oder Sintern gemäß einer Temperaturführung durchgeführt wird, die unter Berücksichtigung der räumlichen Lage und/oder der Geometrie und/oder der Schichtdicke bestimmter Teile des zu beschichtenden Körpers ein gleichmäßiges Aufschmelzen, sich Schließen und Einbrennen der Glaszusammensetzung gewährleistet.

21. Verwendung nach einem der vorhergehenden Ansprüche 16 bis 20,
**dadurch gekennzeichnet, daß**
bestimmte Teile des zu beschichtenden Körpers während des Einbrennens und/oder Sinterns zur Einstellung der optimalen Temperatur gekühlt oder zusätzlich erwärmt werden.

## Claims

1. Glass composition for the production of an enamel-based coating that is highly resistant to corrosion caused by mechanical, thermal and chemical influences,
**characterised in that**
- the glass composition contains substantially no heavy metals and/or heavy metal compounds; except for zirconium dioxide
- the proportions by weight of the individual constituents in the glass composition are in accordance with the following table:
| Constituent | [% by weight] | especially [% by weight] |
|---|---|---|
| Li₂O | 0.25 - 3.0 | 0.5 - 2.5 |
| B₂O₃ | 0.25 - 3.0 | 0.5 - 3.0 |
| MgO | 0.25 - 2.5 | 0.5 - 2.0 |
| Al₂O₃ | 0.25 - 2.0 | 0.5 - 2.0 |
| K₂O | 0.50 - 4.0 | 1.0 - 4.0 |
| CaO | 1.00 - 6.0 | 2.0 - 6.0 |
| ZrO₂ | 8.50 - 13.5 | 9.0 - 13.0 |
| Na₂O | 9.25 - 14.5 | 9.5 - 14.0 |
| SiO₂ | 56.00 - 73.0 | 58.0 - 70.0 |
| Colour-imparting constituents | 0.00 - 2.0 | 0.0 - 2.0 |
so that the glass composition has a thermal expansion coefficient which in a temperature range of from 20°C to 400°C lies in the range of from 87 x 10⁻⁷ K⁻¹ to 110 x 10⁻⁷ K⁻¹, especially in the range of from 90 x 10⁻⁷ K⁻¹ to 103 x 10⁻⁷ K⁻¹ and more especially in the range of from 93 x 10⁻⁷ K⁻¹ to 97 x 10⁻⁷ K⁻¹.

2. Glass composition according to claim 1,
**characterised in that**
the proportion by weight of the sum of the alkali oxides in the glass composition lies in the range of from 10% by weight to 21.5 % by weight and especially in the range of from 11 % by weight to 20.5 % by weight.

3. Glass composition according to either one of the preceding claims,
**characterised in that**
the proportion by weight of the sum of the alkaline earth metal oxides in the glass composition in the range of from 1.25 % by weight to 8.5 % by weight and especially in the range of from 2.5 % by weight to 8 % by weight, there being substantially no barium or strontium present.

4. Glass composition according to any one of the preceding claims,
**characterised in that**
the proportion by weight of the sum of B₂O₃, ZrO₂, SiO₂ and Al₂O₃ in the glass composition in the range of from 65.0 % by weight to 91.5 % by weight and especially in the range of from 68.0 % by weight to 88.0 % by weight.

5. Glass composition according to any one of the preceding claims,
**characterised in that**
the glass composition comprises colour-imparting constituents, more especially one or more colouring oxides and/or one or more colouring pigments.

6. Glass composition according to any one of the preceding claims,
**characterised in that**
the glass composition is substantially fluoride-free.

7. Glass composition according to any one of the preceding claims,
**characterised in that**
the softening temperature of the glass composition lies in the range of from 400°C to 600°C, especially in the range of from 450°C to 580°C and more especially in the range of from 470°C to 550°C.

8. Glass composition according to any one of the preceding claims,
**characterised in that**
the properties of the glass composition and/or the coating are substantially unaffected by colour-imparting constituents present in a concentration of up to 2.5 % by weight, especially up to 2 % by weight.

9. Glass composition according to any one of the preceding claims,
**characterised in that**
prior to stoving, the glass composition is in granular form.

10. Glass composition according to any one of the preceding claims,
**characterised in that**
prior to stoving, the glass composition has particle sizes in the range of from 0.01 µm to 800 µm, especially in the range of from 0.1 µm to 600 µm and more especially in the range of from 1 µm to 500 µm.

11. Glass composition according to any one of the preceding claims,
**characterised in that**
the glass composition is matched in respect of its properties, more especially its expansion coefficient, its viscosity and its corrosion resistance, to the properties of a body being coated, more especially to the material and the geometry thereof, so as to ensure that, both over the coating surface and over the thickness thereof, the stoving behaviour of the glass composition on the body is uniform and homogeneous and the adhesion of the resulting enamel coating to the body is uniform.

12. Glass composition according to any one of the preceding claims,
**characterised in that**
the expansion coefficient of the glass composition is such that during enamelling the enamel is stressed by a body serving for coating, more especially a steel body, to such an extent that compressive stresses are produced.

13. Glass composition according to any one of the preceding claims,
**characterised in that**
after application and stoving on a body, in each coating step the production of a layer thickness in the range of from 0.1 mm to 1.2 mm, especially in the range of from 0.2 mm to 1.0 mm, is ensured.

14. Method of producing a glass composition, wherein substantially heavy-metal-free ceramic raw materials or constituents are mixed together in accordance with the proportions by weight indicated in the table in patent claim 1, then heated and completely melted at a temperature of substantially from 1200°C to 1600°C and subsequently, after quenching, processed to form granules.

15. Use of the glass composition according to any one of claims 1 to 13 in the production of a enamel cover coat on geometric bodies, more especially made of sheet steel and/or boiler plate, and/or on an existing enamel coating and/or on glass and/or on ceramic materials.

16. Use according to claim 15,
for the production of a coated body,
**characterised by**
the following steps:
- grinding of the glass composition with water, especially demineralised water, for the production of an aqueous slip;
- adjustment of the consistency of the slip with the aid of diluents;
- wet application of the slip to the body being coated;
- drying of the applied slip; and
- stoving and/or sintering of the applied slip,
and/or the following steps:
- dry application of the glass composition to the body being coated;
- stoving and/or sintering of the applied glass composition,
the proportions by weight of the individual constituents in the glass composition being in accordance with the table in claim 1.

17. Use according to claim 16,
**characterised in that**
application is carried out by means of a spraying and/or sprinkling technique.

18. Use according to either one of preceding claims 16 and 17,
**characterised in that**
application is carried out using an electrical DC voltage field.

19. Use according to any one of preceding claims 16 to 18,
**characterised in that**
in each coating step, an enamel layer having a layer thickness in the range of from 0.1 mm to 1.2 mm, especially in the range of from 0.2 mm to 1.0 mm, is produced.

20. Use according to any one of preceding claims 16 to 19,
**characterised in that**
the stoving and/or sintering is carried out in accordance with a temperature control regime which, taking into account the spatial position and/or the geometry and/or the layer thickness of certain parts of the body being coated, ensures uniform melting, formation of a coherent surface and stoving of the glass composition.

21. Use according to any one of preceding claims 16 to 20,
**characterised in that**
during the stoving and/or sintering, certain parts of the body being coated are cooled or additionally heated in order to set the optimum temperature.

## Revendications

1. Composition de verre pour la production d'un revêtement à base d'émail à haute résistance à la corrosion vis-à-vis des influences mécaniques, thermiques et chimiques, **caractérisée en ce que**
- la composition de verre ne contient pour l'essentiel aucun métal lourd et/ou aucun composé de métal lourd, sauf pour dioxyde de zirconium ;
- les proportions en poids des composants individuels dans la composition de verre sont présentes comme indiqué dans le tableau suivant :
| Constituant | [% en poids] | De préférence [% en poids] |
|---|---|---|
| Li₂O | 0,25 - 3,0 | 0,5 - 2,5 |
| B₂0₃ | 0,25 - 3,0 | 0,5 - 3,0 |
| MgO | 0,25 - 2,5 | 0,5 - 2,0 |
| AI₂0₃ | 0,25 - 2,0 | 0,5 - 2,0 |
| K₂0 | 0,50 - 4,0 | 1,0 - 4,0 |
| CaO | 1,00 - 6,0 | 2,0 - 6,0 |
| ZrO₂ | 8,50 - 13,5 | 9,0 - 13,0 |
| Na₂O | 9,25 - 14,5 | 9,5 - 14,0 |
| SiO₂ | 56,00 - 73,0 | 58,0 - 70,0 |
| Composants colorants | 0,00 - 2,0 | 0,0 - 2,0 |
de telle sorte que la composition de verre présente un coefficient de dilatation thermique, qui se situe dans une gamme de températures de 20°C à 400°C dans la plage de 87 x 10⁻⁷ K⁻¹ à 110 x 10⁻⁷ K⁻¹, de préférence dans la plage de 90 x 10⁻⁷ K⁻¹ à 103 x 10⁻⁷ K⁻¹, et en particulier de préférence dans la plage de 93 x 10⁻⁷ K⁻¹ à 97 x 10⁻⁷ K⁻¹.

2. Composition de verre selon la revendication 1, **caractérisée en ce que** la proportion en poids de la somme des oxydes alcalins dans la composition de verre se situe dans la plage de 10 % en poids à 21.5 % en poids et de préférence dans la plage de 11 % en poids à 20,5 % en poids.

3. Composition de verre selon l'une quelconque des revendications précédentes, **caractérisée en ce que** la proportion en poids de la somme des oxydes alcalinoterreux dans la composition de verre se situe dans la plage de 1,25 % en poids à 8,5 % en poids et de préférence dans la plage de 2,5 % en poids à 8 % en poids, sachant que pour l'essentiel aucun baryum et aucun strontium n'y sont contenus.

4. Composition de verre selon l'une quelconque des revendications précédentes, **caractérisée en ce que** la proportion en poids de la somme de B₂O₃, ZrO₂, SiO₂ et Al₂O₃ dans la composition de verre se situe dans la plage de 65,0 % en poids à 91,5 % en poids et en particulier de préférence dans la plage de 68,0 % en poids à 88,0 % en poids.

5. Composition de verre selon l'une quelconque des revendications précédentes, **caractérisée en ce que** la composition de verre contient des composants colorants, en particulier un ou plusieurs oxydes colorants et/ou un ou plusieurs pigments colorants.

6. Composition de verre selon l'une quelconque des revendications précédentes, **caractérisée en ce que** la composition de verre est pour l'essentiel exempte de fluorure.

7. Composition de verre selon l'une quelconque des revendications précédentes, **caractérisée en ce que** la température de ramollissement de la composition de verre se situe dans la plage de 400°C à 600°C, de préférence dans la plage de 450°C à 580°C et en particulier de préférence dans la plage de 470°C à 550°C.

8. Composition de verre selon l'une quelconque des revendications précédentes, **caractérisée en ce que** les propriétés de la composition de verre et/ou du revêtement de composants colorants, lesquels sont présents de préférence dans une concentration allant jusqu'à 2,5 % en poids, de préférence jusqu'à 2% en poids, ne sont pas significativement influencées.

9. Composition de verre selon l'une quelconque des revendications précédentes, **caractérisée en ce que** la composition de verre est présente, avant la cuisson, sous la forme de granulés.

10. Composition de verre selon l'une quelconque des revendications précédentes, **caractérisée en ce que** la composition de verre présente, avant une cuisson, des tailles de particules dans le domaine de 0,01 µm à 800 µm, de préférence dans le domaine de 0,1 µm à 600 µm et en particulier de préférence dans le domaine de 1 µm à 500 µm.

11. Composition de verre selon l'une quelconque des revendications précédentes, **caractérisée en ce que** la composition de verre est adaptée pour ce qui est de ses propriétés, en particulier de son coefficient de dilatation, de sa viscosité, de sa résistance à la corrosion, aux propriétés d'un corps à revêtir, en particulier à son matériau et à sa géométrie, de site que, non seulement sur la surface de revêtement mais aussi dans son épaisseur, un comportement de cuisson uniforme et homogène de la composition de verre au corps ainsi qu'une adhésion uniforme du revêtement d'émail résultant sur le corps en question soient garanties.

12. Composition de verre selon l'une quelconque des revendications précédentes, **caractérisée en ce que** le coefficient de dilatation de la composition de verre est déterminé de sorte que l'émail, lors de l'émaillage, soit déformé par un corps servant au revêtement, en particulier un corps en acier, à un point tel que des contraintes de compression sont exercées.

13. Composition de verre selon l'une quelconque des revendications précédentes, **caractérisée en ce que** la production d'une épaisseur de couche dans la plage de 0,1 mm à 1,2 mm, de préférence dans la plage de 0,2 mm à 1,0 mm, est garantie par étape de revêtement après application et cuisson sur un corps.

14. Procédé de production d'une composition de verre, sachant que l'on procède au mélange de matières premières ou de composants céramiques pour l'essentiel exempts de métaux lourds selon les proportions en poids indiquées par le tableau de la revendication 1, que l'on chauffe ensuite à une température pour l'essentiel de 1200°C à 1600°C et que l'on procède à la fusion complète et ensuite, après une trempe, à la mise en oeuvre sous forme de granulés.

15. Utilisation de la composition de verre selon l'une quelconque des revendications 1 à 13, pour la production d'un revêtement d'émail de recouvrement sur des corps géométriques, en particulier en tôle d'acier et/ou de tôle pour chaudières et/ou sur un revêtement d'émail existant et/ou sur du verre et/ou sur des matériaux céramiques.

16. Utilisation selon la revendication 15 pour la production d'un corps revêtu, **caractérisée par** les étapes suivantes :
- mouture de la composition de verre à l'aide d'eau de préférence complètement déminéralisée en vue de la production d'une barbotine aqueuse ;
- réglage de la consistance de la barbotine à l'aide d'agents de fixation ;
- application humide de la barbotine sur le corps à revêtir ;
- séchage de la barbotine appliquée ; et
- cuisson et/ou frittage de la barbotine appliquée et/ou autres étapes:
- application à sec de la composition de verre sur le corps à revêtir;
- cuisson et/ou frittage de la composition de verre appliquée, sachant que les proportions en poids des composants individuels dans la composition de verre sont présentes conformément au tableau cité dans la revendication 1.

17. Utilisation selon la revendication 16, **caractérisée en ce que** l'application est effectuée par une technique de projection et/ou de pulvérisation,

18. Utilisation selon l'une quelconque des revendications précédentes 16 ou 17, **caractérisé en ce que** l'application est effectuée par utilisation d'un champ électrique à tension constante.

19. Utilisation selon l'une quelconque des revendications précédentes 16 à 18, **caractérisée en ce que** par étape de revêtement l'on produit une couche d'émail ayant une épaisseur de couche dans la plage de 0,1 à 1,2 mm, de préférence dans la plage de 0,2 mm à 1,0 mm.

20. Utilisation selon l'une quelconque des revendications précédentes 16 à 19, **caractérisée en ce que** la cuisson et/ou le frittage est effectué(e) conformément à un profil de températures, qui garantit une fusion uniforme, une auto fermeture et une cuisson de la composition de verre en tenant compte de la situation spatiale et/ou de la géométrie et/ou de l'épaisseur de couche de pièces déterminées du corps à revêtir.

21. Utilisation selon l'une quelconque des revendications précédentes 16 à 20, **caractérisée en ce que** des pièces déterminées du corps à revêtir sont refroidies ou de nouveau échauffées pendant la cuisson et/ou le frittage en vue de l'ajustage de la température optimale.
